Europäisches Patentamt

European Patent Office

Office européen des brevets

(11) Publication number: **0 427 440 A2**

# EUROPEAN PATENT APPLICATION

(21) Application number: 90311883.4

(22) Date of filing: 30.10.90

(51) Int. Cl.⁵: **F16L 3/20, F16L 7/00**

(30) Priority: 06.11.89 US 432290

(43) Date of publication of application:
15.05.91 Bulletin 91/20

(84) Designated Contracting States:
**ES IT SE**

(71) Applicant: **THE BABCOCK & WILCOX COMPANY**
**1010 Common Street, P.O. Box 60035**
**New Orleans, Louisiana 70160(US)**

(72) Inventor: **Detzel, Roger Alan**

**2994 Shellhart Road**
**Norton, Ohio 44203(US)**
Inventor: **Knoebel, Paul S.**
**1029 Center Road**
**Clinton, Ohio 44216(US)**
Inventor: **Walker, David Judson**
**185 Dawna Drive**
**Wadsworth, Ohio 44281(US)**

(74) Representative: **Purvis, William Michael Cameron et al**
**D. Young & Co. 10 Staple Inn**
**London WC1V 7RD(GB)**

(54) **Apparatus for vertically suspending a high-temperature conduit.**

(57) Apparatus for vertically suspending an internal conduit (12) subject to temperature fluctuations and having shear lugs (22) secured around its perimeter. The shear lugs (22) rest upon a spool member (28) surrounding the conduit (12) and configured to permit thermal expansion/contraction of the supported conduit (12) as needed. The spool member (28) is, in turn, supported by an outer casing (14) in a manner permitting the spool member (28) to move or rotate independently of the casing (14). Thus, no rigid connector couples the internal conduit (12) to the outer casing (14), instead the spool (28) member provides the necessary support while being fully movable with respect to both the internal conduit (12) and the outer casing (14).

FIG.3

EP 0 427 440 A2

# APPARATUS FOR VERTICALLY SUSPENDING A HIGH-TEMPERATURE CONDUIT

The invention pertains to apparatus for vertically suspending a segmented, high-temperature conduit within an outer casing so as to accommodate the thermal expansion/contraction of the conduit.

In circulating fluidised bed boilers, many problems present themselves when attempting to recirculate the flow of high temperature solids, usually around 870°C (1,600°F). Few systems exist that can accommodate such high temperature values especially when the material being transported is a dense combination of abrasive solids and high temperature gases. Additionally, the temperature of the transported material does not remain constant but instead varies as the use of or demand on the boiler varies. den demand is low, the to-be-recycled material can accumulate in the transport conduit creating a high temperature gradient across the system; and when demand is high, the temperature of the material flowing through the transport conduit is essentially the same as the temperature of the flue gas exiting the combustor.

Furthermore, high temperature values are not the only factors affecting the transfer conduit, instead, changes or swings in these temperature values (thermal shocking) also cause damage. Temperature swings on the order of several hundred degrees over a period of several minutes have been recorded. Also, large temperature differences frequently occur on opposite sides of the same pipe. Additionally, should pluggage occur in an upstream section of the system (such as in a hopper), tremendous transient forces can develop in the transfer conduit wherever the blockage is released. In one instance, the level of solids in a hopper was observed to drop 1.5 to 2 metres (five or six feet) in about five seconds after one such blockage was removed.

Consequently, high temperatures and forces, and rapid swings in the same, cause the transport conduit to undergo significant stresses and strains as well as thermal expansion and contraction. Attempts to support such a conduit, and allow for its thermal expansion and contraction, have to date not been satisfactorily applied to circulating fluidised bed boilers because of the abrasive material being transported, the temperature and pressure requirements and the size and weight of the transport conduit itself.

According to one aspect of the invention there is provided apparatus for vertically suspending a generally vertically oriented conduit subject to temperature fluctuations and thus thermal expansion/contraction due to material being conveyed therein; the apparatus comprising:

first shear means fixedly secured to the outer perimeter of the conduit to support the conduit therefrom;

a spool member to support the first shear means thereon, the first shear means resting upon and being independently movable with respect to the spool member;

first alignment means to maintain alignment between the first shear means and the spool member whenever one thereof is moved with respect to the other;

second shear means fixedly secured to a support to support the spool member thereon, the spool member resting upon and being independently movable with respect to the second shear means; and,

second alignment means to maintain alignment between the second shear means and the spool member whenever the spool member moves with respect to the second shear means.

According to another aspect of the invention there is provided apparatus for vertically suspending a generally vertical internal conduit subject to thermal expansion/contraction and comprising a plurality of segments, the apparatus comprising:

collar means secured to one of the segments axially to align an adjacent one of the segments therewith;

a plurality of first shear members secured around the outer circumference of the internal conduit;

a spool member engaging the first shear members to support the internal conduit thereon, the internal conduit being independently movable, expandable and contractible while being supported by the spool member

; first alignment means to align the internal conduit with the spool member;

a casing surrounding the internal conduit and the spool member

a second shear member secured to the interior circumference of the casing and to support the spool member therefrom, the spool member being independently movable, rotatable, expandable and contractible while being supported by the casing; and,

second alignment means to maintain the alignment of the spool member with respect to the casing.

The apparatus does not rigidly secure the inner conduit to the outer casing but instead allows the inner conduit to expand or contract as needed independently of the outer casing.

The conduit is thus independently movable with respect to the spool member, and the spool member is independently movable with respect to the support and the second shear means. Consequently, significant thermal expansion/contraction of the conduit and its supporting structure can be accommodated, and, any pressure that occurs in the conduit can be contained or withstood.

The invention is diagrammatically illustrated by way of example in the accompanying drawings in which:

Figure 1 is a pictorial side view of apparatus for supporting a vertical segmented high temperature conduit subject to temperature fluctuations and thus thermal expansion/contraction due to material being conveyed therein according to the invention;

Figure 2 is a top sectional view taken on line 2-2 of Figure 1, illustrating a spool member of the apparatus of Figure 1; and

Figure 3 is a side sectional view taken on line 3-3 of Figure 2.

Referring to the drawings, a support 10 secures a segmented, high-temperature internal conduit 12 to an outer casing 14. The internal conduit 12 is designed to withstand temperatures ranging from ambient temperature to 870°C (1,600°F) or more, and for that purpose, it is generally constructed of stainless steel that has the pressure and abrasion resistant properties needed to recycle solids for circulating fluidised bed boilers.

As shown, the segmented conduit 12 has a collar 16 secured around and reinforcing the upper end of each segment. This collar 16 enables an upper segment 18 to expand into a lower segment 20 while remaining in axial alignment. The collar 16 is sized closely to fit around the upper segment 18 so that any gas or particle loss or leakage is and remains minimal.

Also rigidly affixed to the reinforced ends of the segments of the internal conduit 12 are a plurality of shear lugs 22. These shear lugs 22 are spaced about the outer circumference of the internal conduit 12 below each collar 16 and they are sized and configured to support the entire weight of the segment to which they are secured. It is preferred that the shear lugs 22 not be directly attached to each other thereby forming a continuous ring around the conduit 12 but instead be spaced from each other so that there will be only limited constraint on the reinforced segment end as it expands or contracts.

Attached to each shear lug 22 are alignment guides 24 that each radiate slightly outward and then downward from the respective shear lug 22. Two alignment guides 24 per shear lug 22 has been determined to be the optimal number since three or more such guides 24 would require accurate alignment between them while only one guide 24 would not provide a back-up guide should the one guide 24 fail.

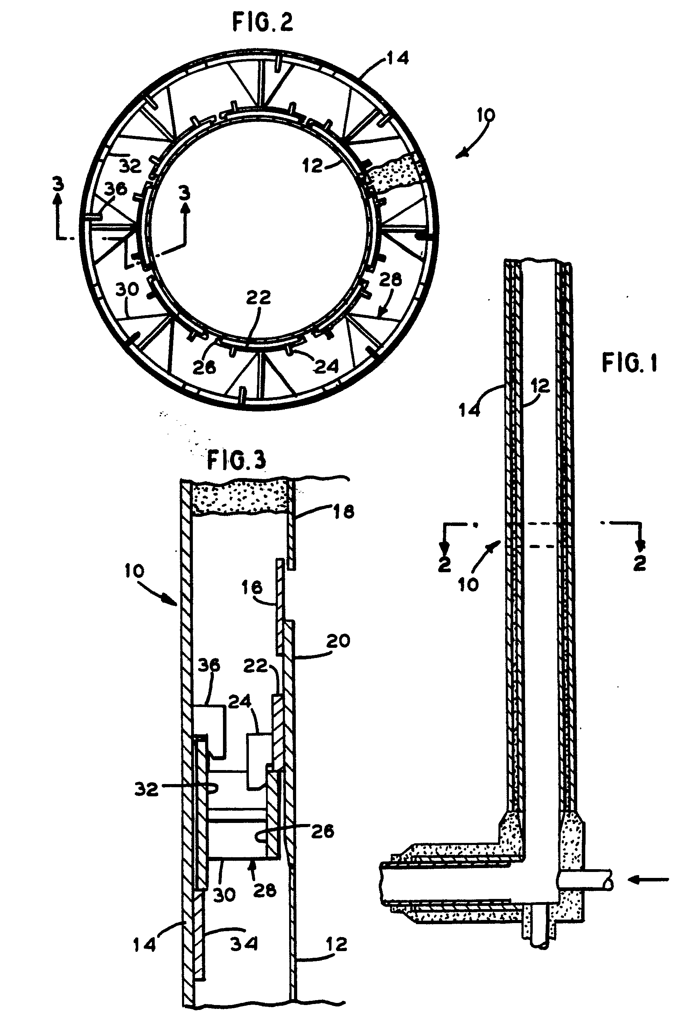

The gap between the downward portion of each alignment guide 24 and the reinforced end of the internal conduit 12 is sized to provide sufficient clearance to slide an inner ring 26 of a spool member 28 thereinto. As illustrated, the inner ring 26 comprises a plurality of curved plates that closely conform to the curvature of the reinforced end of the internal conduit 12 and the shear lugs 22. The downward portion of the alignment guides 24 maintain adequate bearing alignment between the shear lugs 22 and the inner ring 26 such that the shear lugs 22 (and hence the internal conduit 12) remain at-rest upon the inner ring 26 without there being any rigid connector coupling the two together. Preferably, and as shown in Figure 2, the plates of the inner ring 26 have a curve similar to that of the shear lugs 22 with each such plate extending slightly beyond the arc of each shear lug 22. Consequently, no matter how the internal conduit 12 moves or rotates, the shear lugs 22 will always rest upon the inner ring 26.

As illustrated, the spool member 28 comprises a series of spokes 30 that extend radially to support the individual plates of the inner ring 26. In practice, it was found that a series of horizontally and vertically aligned members form suitable spokes 30. Each of the spokes 30, in turn, is rigidly mounted to an outer ring 32 thus completing the structure of the spool member 28. The outer ring 32, as shown in Figure 2, is of continuous construction as compared to the spaced plates of the inner ring 26. Additionally, the outer ring 32 is not rigidly secured to any other component (except the spokes 30) but instead rests upon a plurality of outer shear lugs 34 in much the same manner as the inner shear lugs 22 upon the inner ring 26. Each outer shear lug 34 is rigidly affixed to the casing 14 in order to support the outer ring 32 and hence the spool member 28.

A plurality of outer alignment guides 36 are also secured to the casing 14 and they are configured somewhat similarly to the inner alignment guides 24. Each outer alignment guide 36 provides a gap between its downward portion and the casing 14 sufficient for the outer ring 32 to slide there into while bearing upon the outer shear lug 34. In this fashion, the spool member 28 can expand or contract, both horizontally and vertically, as well as rotate with respect to the casing 14 and still remain supported by the outer shear lugs 34. The same can also be said for the internal conduit 12. The conduit 12 is able to expand or contract, both horizontally and vertically, as well as rotate with respect to the spool member 28 and still remain supported by the inner ring 26. Thus, full independent movement in any direction is provided for both the internal conduit 12 and the spool member 28. Also, during any such movement, the collar 16 maintains the proper axial alignment of the segmented components of the internal conduit 12. Consequently, two levels of thermal isolation or two methods of relieving thermal expansion/contraction are provided while still suspending the conduit 12 from the casing 14. The annular region between the conduit 12 and the casing 14 can be packed with insulation in an effort to isolate the heat of the conduit 12 from the casing 14.

## Claims

1. Apparatus for vertically suspending a generally vertically oriented conduit (12) subject to temperature fluctuations and thus thermal expansion/contraction due to material being conveyed therein; the apparatus comprising:
first shear means (22) fixedly secured to the outer perimeter of the conduit (12) to support the conduit (12) therefrom;
a spool member (28) to support the first shear means (22) thereon, the first shear means (22) resting upon and being independently movable with respect to the spool member (28);
first alignment means (24) to maintain alignment between the first shear means (22) and the spool member (28) whenever one thereof is moved with respect to the other;
second shear means (34) fixedly secured to a support (14) to support the spool member (28) thereon, the spool member (28) resting upon and being independently movable with respect to the second shear means (34); and,
second alignment means (36) to maintain alignment between the second shear means (34) and the spool member (28) whenever the spool member (28) moves with respect to the second shear means (34).

2. Apparatus according to claim 1, wherein the spool member (28) comprises an inner ring (26), an outer ring (32), and a series of spokes (30) connecting them together, the inner ring (28) being configured to engage the first shear means (22) and thereby support the conduit (12) thereupon, and the outer ring (32) being configured to engage and be supported by the second shear means (24).

3. Apparatus according to claim 2, wherein the inner ring (26) comprises a plurality of spaced plates each having a curvature similar to that of the first shear means (22), and wherein the outer ring (32) comprises a continuous annular member.

4. Apparatus according to claim 1 or claim 2, wherein the first shear means (22) comprise a plurality of curved spaced plates each fixedly secured to a reinforced portion of the conduit.

5. Apparatus according to claim 4, wherein the first alignment means (26) comprise a plurality of alignment guides to maintain the co-axial alignment of the inner ring (26) with the first shear means (22).

6. Apparatus according to claim 5, wherein the vertically oriented conduit (12) comprises a plurality of segments (18, 20) with collar means (16) at each segment connection to maintain the axial alignment of the upper segment with respect to the lower segment.

7. Apparatus for vertically suspending a generally vertical internal conduit (12) subject to thermal expansion/contractions and comprising a plurality of segments, the apparatus comprising:
collar means (28) secured to one of the segments axially to align an adjacent one of the segments therewith
; a plurality of first shear members (22) secured around the outer circumference of the internal conduit (12);
a spool member (28) engaging the first shear members (22) to support the internal conduit (12) thereon, the internal conduit (12) being independently movable, expandable, and contractible while being supported by the spool member (28);
first alignment means (24) to align the internal conduit (12) with the spool member (28);
a casing (14) surrounding the internal conduit (12) and the spool member (28);
a second shear member (34) secured to the interior circumference of the casing (14) and to support the spool member (28) therefrom, the spool member (28) being independently movable, rotatable, expandable and contractible while being supported by the casing (14); and,
second alignment means (36) to maintain the alignment of the spool member (28) with respect to the casing (14).

8. Apparatus according to claim 7, wherein the spool member (28) comprises:
an inner ring (26) engaging and supporting thereupon the first shear member (22) and hence the internal conduit (12), the first shear member (22) and hence the conduit (12) being independently movable with respect to the inner ring (26);
an outer ring (32) engaging and being supported by the second shear member (34), the spool member (26) being independently movable with respect to the second shear member (36); and,
a plurality of radial spokes (30) rigidly affixing the inner ring (26) to the outer ring (32).

9. Apparatus according to claim 8, wherein the first (24) and second (36) alignment means respectively align the inner (26) and outer (32) rings

FIG.2

14

10

32

3

36

3

12

30

22

28

26

24

FIG.3

18

10

16

20

36

22

24

32

26

30

28

14

34

12

FIG.1

14

12

2

2

10